Europäisches Patentamt

European Patent Office

Office européen des brevets

(19)

(11) **EP 1 384 106 B1**

(12) **EUROPÄISCHE PATENTSCHRIFT**

(45) Veröffentlichungstag und Bekanntmachung des Hinweises auf die Patenterteilung:
**15.09.2004 Patentblatt 2004/38**

(51) Int Cl.7: **G02C 7/02**

(21) Anmeldenummer: 02742703.8

(22) Anmeldetag: **30.04.2002**

(86) Internationale Anmeldenummer:
**PCT/DE2002/001567**

(87) Internationale Veröffentlichungsnummer:
**WO 2002/088826 (07.11.2002 Gazette 2002/45)**

(54) **VERFAHREN ZUR HERSTELLUNG EINES BRILLENGLASES UNTER BERÜCKSICHTIGUNG DER OPTIMALEN, INDIVIDUELLEN PROGRESSIONSLÄNGE**

METHOD FOR THE PRODUCTION OF A SPECTACLE GLASS TAKING INTO ACCOUNT THE OPTIMUM INDIVIDUAL LENGTH OF PROGRESSION

PROCEDE POUR PRODUIRE UN VERRE DE LUNETTES AVEC PRISE EN CONSIDERATION DE LA LONGUEUR DE PROGRESSION INDIVIDUELLE OPTIMALE

(84) Benannte Vertragsstaaten:
**DE ES FR GB IT**

(30) Priorität: **30.04.2001 DE 10121133**

(43) Veröffentlichungstag der Anmeldung:
**28.01.2004 Patentblatt 2004/05**

(73) Patentinhaber: **Rodenstock GmbH**
**80469 München (DE)**

(72) Erfinder: **DORSCH, Rainer**
**81477 München (DE)**

(74) Vertreter: **Müller-Boré & Partner Patentanwälte**
**Grafinger Strasse 2**
**81671 München (DE)**

(56) Entgegenhaltungen:
**EP-A- 0 911 672        US-A- 6 142 627**

- **S. MORGENSTERN: "Short Corridor Progressives: Lenses for the New Millenium" VISIONCAREPRODUCTS.COM, [Online] Januar 2001 (2001-01) - Februar 2001 (2001-02), XP002226548 Gefunden im Internet: <URL:http://www.visioncareproducts.com/02 / lenses.html> [gefunden am 2003-01-09]**

**Beschreibung**

**Technisches Gebiet**

Diese Erfindung betrifft ein Verfahren zur Bestimmung der optimalen und individuellen Progressionslänge eines Gleitsichtglases anhand des gemessenen Hornhautscheitelabstands einer vorangepassten Brillenfassung.

**Stand der Technik**

Nahezu bei allen Glasherstellern gibt es für die Progressionslänge L von Gleitsichtgläsern einen produktabhängigen Standardwert von ca. 22 mm.
Speziell für Fassungen mit geringer Scheibenhöhe werden von manchen Herstellern zusätzlich kürzere Progressionslängen angeboten, die z.T. nur 14 mm betragen können.
Aus dem Stand der Technik ist jedoch kein Verfahren bekannt, das die Progressionslänge eines Gleitsichtglases unter Berücksichtigung des Hornhautscheitelabstandes (HSA) der vorangepassten Fassung festlegt.
Eine Standard-Progressionslänge von 22 mm wirkt sich ungünstig aus, sobald der Hornhautscheitelabstand einen gewissen Mittelwert (15 mm) über- bzw. unterschreitet und somit das Brillenglas nicht mehr gemäß einer empirisch ermittelten Gebrauchsstellung vor dem Augendrehpunkt sitzt. Dies gilt auch dann, wenn aufgrund der gewählten Fassung und/oder abweichenden Gebrauchsbedingungen kürzere Progressionslängen eingesetzt werden müssen.
Entsprechend der empirisch ermittelten Gebrauchsstellung ist eine feste Progressionslänge von 22 mm nur bei einem mittleren HSA von 15 mm optimal. Bei kleinerem HSA muß der Blick weiter nach unten gesenkt werden, bei größerem HSA ist der Nahbezugspunkt schon bei geringerer Blickauslenkung erreicht.
Erfahrungswerten zufolge ergibt sich beim Lesen eine (von den meisten Anwendern als angenehm empfundene) Blicksenkung gegenüber der horizontalen Blickauslenkung von ca. 32 Grad. Verändert sich der HSA entsprechend der Fassungswahl des Endgebrauchers gegenüber dem Standard-HSA, entspricht die Blickauslenkung, um die volle Addition zu erlangen, bzw. um durch den Nahbezugspunkt $B_N$ zu blicken, nicht mehr der empirisch ermittelten Gebrauchsstellung. Dies kann eine für den Gleitsichtglasträger unangenehme Kopfhaltung bzw. Augenauslenkung erzwingen. Bei kleinerem HSA (z.B. 10 mm) müssen der Kopf bzw. die Augen gesenkt werden (falls dies überhaupt möglich ist), bei größerem HSA (z.B. 20 mm) müssen der Kopf bzw. die Augen unnatürlich angehoben werden.

**Darstellung der Erfindung**

Der Erfindung liegt die Aufgabe zugrunde, ein Verfahren anzugeben, mit dem die optimale und individuelle Progressionslänge eines Gleitsichtglases anhand des gemessenen Hornhautscheitelabstands einer vorangepassten Brillenfassung bzw. die durch den gemessenen HSA gegebene Abweichung von einer kürzeren, beispielsweise durch die Brillenfassung bestimmten Progressionslänge ermittelt werden kann.
Die Aufgabe wird durch ein Verfahren nach Anspruch 1 gelöst, das durch die folgenden Schritte gekennzeichnet ist:

a) Bereitstellen des Wertes des individuellen Hornhautscheitelabstands (HSA) einer vorangepassten Brillenfassung

b) Messen des individuellen Abstands d zwischen einem Fernbezugspunkt $B_F$ und einem Zentrierkreuz $Z_K$

c) Ermitteln der optimalen und individuellen Progressionslänge ($L_{opt}$) gemäß der folgenden Formel:

$$L_{opt} = 0,63 * (HSA + 13,5\ mm) + d\ (B_F, ZK).$$

Der Wert von 13,5 mm kann variiert werden, wenn die Progressionslänge kürzer als der einleitend angegebene Standardwert der Progressionslänge von 22 mm sein soll.
Diese ermittelte Progressionslänge kann dem Glashersteller übermittelt werden, der dann ein Gleitsichtglas mit dieser individuellen Progressionslänge berechnet und herstellt.
Zur Berechnung kann insbesondere wie folgt vorgegangen werden:
Betrachtet man drei verschiedene Stellungen eines Brillenglases mit fester Progressionslänge vor dem Augendrehpunkt Z' entsprechend drei unterschiedlichen HSA.
Die Vorneigung der Fassungsebene beträgt z.B. 0 Grad und der DIN-Abstand Augendrehpunkt-Apex der Hornhaut 13,5 mm. $B_F$ bezeichnet den Fernbezugspunkt, $B_N$ bezeichnet den Nahbezugspunkt; die Progressionslänge L ist der Abstand zwischen $B_F$ und $B_N$ und ZK bezeichnet das Zentrierkreuz (nach DIN bzw. ISO).

Gemäß der Erfindung wird die optimale, individuelle Progressionslänge nach folgendem Zusammenhang berechnet:

Der Blickwinkel $\alpha$ zwischen Nahbezugspunkt $B_N$ und Zentrierkreuz ZK für optimales Lesen im Nahbezugspunkt entspricht bei einer Progressionslänge von 22 mm und einem HSA von 15 mm etwa 32,3 Grad nach empirisch ermittelter Gebrauchsstellung.

$$\tan(32,3°) = \text{Abstand } (B_N, ZK)/(HSA + 13,5 \text{ mm})$$

Dabei ist 13,5 mm der DIN bzw. ISO-Abstand vom Augendrehpunkt zum Apex der Hornhaut. Dann gilt:

$$L_{opt} = 0,63 * (HSA + 13,5 \text{ mm}) + d(B_F, ZK).$$

Setzt man den gemessenen HSA einer vorangepassten Fassung in obige Formel ein, ergibt sich die optimale individuelle Progressionslänge des Gleitsichtglases.

Bei einem Abstand von 4 mm zwischen ZK und $B_F$ ergibt sich für einen HSA von 20 mm eine optimale Progressionslänge von 18,8 mm. Dies demonstriert augenscheinlich die großen Abweichungen der individuellen Progressionslänge zu der Standard-Progressionslänge von 22 mm.

Zusätzlich können die Vorneigung der Fassungsebene und die Verordnung des Brillenglases (Sphäre, Zylinder, Achse, Prisma, Basis) bei einer individuellen Berechnung des Gleitsichtglases berücksichtigt werden.

**Patentansprüche**

1. Verfahren zur Herstellung eines progressiven Brillenglases mit wenigstens einer progressiven Fläche, bei dem die wenigstens eine progressive Fläche unter Berücksichtigung von individuellen Daten, wie dem Hornhaut/Scheitel-Abstandes etc., des Brillenträgers derart berechnet wird, dass in ausgezeichneten Punkten einer Hauptlinie und insbesondere dem sogenannten Fernbezugspunkt, ($B_F$) und dem Nahbezugspunkt ($B_N$) das Brillenglas eine bestimmte, durch ein Brillenrezept vorgegebene Wirkung hat,
   **gekennzeichnet durch** die folgenden Schritte:

   - der individuelle Hornhaut/Scheitel-Abstand (HSA) bei einer vom Brillenträger ausgewählten, vorangepassten Brillenfassung wird gemessen,
   - die für die vorangepasste Brillenfassung optimale, individuelle Progressionslänge ($L_{opt}$), d.h. der Abstand zwischen Fernbezugspunkt und Nahbezugspunkt in Richtung der Vertikalen im Gebrauchsstellung wird mittels des folgenden Zusammenhangs ermittelt:

$$L_{opt} = \tan(32,3° \pm 1°) * (HSA + 13, 5 \text{ mm}) + d(B_F, ZK),$$

   hierbei bedeuten:

   HSA:  Hornhaut/Scheitel-Abstand
   $d(B_F, ZK)$  Abstand Fernbezugspunkt/Zentrierkreuz

   - die progressive Fläche des Brillenglases wird derart berechnet, dass sich die ermittelte individuelle Progressionslänge $L_{opt}$ ergibt, und
   - das Brillenglas wird entsprechend den berechneten Daten gefertigt.

2. Verfahren nach Anspruch 1,
   **dadurch gekennzeichnet, dass** gilt:
   $$3mm \leq d(B_F, ZK) \leq 5mm$$
   und insbesondere
   $$d(B_F, ZK) = 4mm.$$

3. Verfahren nach Anspruch 1,

**dadurch gekennzeichnet, dass** zur Ermittlung des Wertes von d($B_F$, ZK) der individuelle Abstand d zwischen dem Fernbezugspunkt $B_F$ dem Durchstoßpunkt einer durch den Augendrehpunkt Z' verlaufenden und horizontal verlaufenden Geraden (0°-Blickrichtung) durch die Fassungsebene und einem Zentrierkreuz $Z_K$ ermittelt wird.

4. Verfahren nach einem der Ansprüche 1 bis 3,
**dadurch gekennzeichnet, dass** bei der Bestimmung des Wertes der optimalen, individuellen Progressionslänge ($L_{opt}$) weitere individuelle Werte berücksichtigt werden.

5. Verfahren nach Anspruch 4,
**dadurch gekennzeichnet, dass** ein weiterer individueller Wert die Vorneigung der Fassungsebene ist.

6. Verfahren nach Anspruch 4 oder 5,
**dadurch gekennzeichnet, dass** weitere individuelle Werte die sphärische Wirkung, die Addition, die astigmatische Wirkung und Achslage sowie das Prisma und die Basis des Prismas sind.

7. Verfahren nach einem der Ansprüche 1 bis 6, **gekennzeichnet durch** folgende Zuordnung zwischen Hornhaut/Scheitelabstand HSA und der individuellen Progressionslänge $L_{opt}$:

| HSA | $L_{opt}$ |
|-------|-----------|
| 10 mm | 18,8 mm |
| 15 mm | 22 mm |
| 20 mm | 25,1 mm. |

8. Verfahren nach einem der Ansprüche 1 bis 7,
**dadurch gekennzeichnet, dass** die Berechnung des Brillenglases und insbesondere der progressiven Fläche in Gebrauchsstellung erfolgt.

**Claims**

1. Process for the production of a progressive spectacle glass with at least one progressive surface, in which the at least one progressive surface is calculated taking into consideration individual data of the spectacle wearer such as cornea/vertex distance etc. in such a manner that the spectacle glass has a certain effect predetermined by a spectacles prescription at marked points of a principal line and in particular at the so-called far reference point ($B_F$) and near reference point ($B_N$),
**characterised by** the following steps:

   - the individual cornea/vertex distance (CVD) is measured in a pre-adapted spectacle frame selected by the spectacle wearer,
   - the optimum individual length of progression ($L_{opt}$) for the pre-adapted spectacle frame, i.e. the distance between the far reference point and the near reference point in the direction of the vertical in the position of use, is determined by means of the following equation:

$$L_{opt} = \tan (32.3° \pm °)*(CVD + 13.5 \text{ mm}) + d(B_F, ZK)$$

   wherein:

   CVD means cornea/vertex distance
   d($B_F$, ZK) means the far reference point/centring cross distance,

   - the progressive surface of the spectacle glass is calculated such that the determined individual length of progression $L_{opt}$ results, and
   - the spectacle glass is produced in accordance with the calculated data.

2. Process according to Claim 1, **characterised in that** the following applies:
   $3 \text{ mm} \leq d(B_F, ZK) \leq 5 \text{ mm}$

and in particular
d($B_F$, ZK) = 4 mm.

**3.** Process according to Claim 1, **characterised in that** to determine the value of d($B_F$, ZK), the individual distance d between the far reference point $B_F$ [and?] the intersection point of a straight line (0° viewing direction) running horizontally and running through the centre of rotation of the eye Z' is determined by the plane of the frame and a centring cross $Z_K$.

**4.** Process according to one of Claims 1 to 3, **characterised in that** in the determination of the value of the optimum individual length of progression ($L_{opt}$), further individual values are taken into consideration.

**5.** Process according to Claim 4, **characterised in that** a further individual value is the initial inclination of the plane of the frame.

**6.** Process according to Claim 4 or 5, **characterised in that** further individual values are the spherical effect, the addition, the astigmatic effect and axial position, and also the prism and the base of the prism.

**7.** Process according to one of Claims 1 to 6, **characterised by** the following correlation between the cornea/vertex distance CVD and the individual length of progression $L_{opt}$:

| CVD | $L_{opt}$ |
|---|---|
| 10 mm | 18.8 mm |
| 15 mm | 22 mm |
| 20 mm | 25.1 mm. |

**8.** Process according to one of Claims 1 to 7, **characterised in that** the calculation of the spectacle glass and in particular the progressive surface is performed in the position of use.

**Revendications**

**1.** Procédé pour produire un verre de lunettes progressif avec au moins une surface progressive, avec lequel l'au moins une surface progressive est calculée de telle façon, en tenant compte de données individuelles du porteur des lunettes, telles que l'espacement cornée/sommet, etc., qu'à des points accentués d'une ligne principale, et en particulier au point de référence appelé distant ($B_F$) et au point de référence proche ($B_N$), le verre de lunette produit un certain effet imposé par une ordonnance de lunettes, **caractérisé par** les étapes suivantes :

- mesure de l'espacement individuel cornée/sommet (HSA) pour une monture de lunettes choisie par le porteur des lunettes et ayant fait l'objet d'une adaptation préliminaire,
- détermination à l'aide de la relation suivante de la longueur de progression individuelle optimale ($L_{opt}$) pour la monture de lunettes ayant fait l'objet d'une adaptation préliminaire, c'est-à-dire de l'espacement entre le point de référence distant et le point de référence proche en direction de la verticale en position d'utilisation :

$$L_{opt} = \tan(32{,}3° \pm 1°) * (HSA + 13{,}5 \text{ mm}) + d(B_F, ZK),$$

où les significations sont les suivantes :

HSA : espacement cornée/sommet
d($B_F$, ZK) : Espacement entre le point de référence éloigné et la croix de centrage,

- calcul de la surface progressive du verre de lunettes de telle façon que la longueur de progression individuelle $L_{opt}$ qui a été déterminée soit obtenue et
- fabrication du verre de lunettes selon les données calculées.

**2.** Procédé selon la revendication 1, **caractérisé en ce que** l'équation suivante
3 mm $\leq$ d($B_F$, ZK) $\leq$ 5 mm

et en particulier l'équation

$$d(B_F, ZK) = 4 \text{ mm}$$

sont applicables.

3. Procédé selon la revendication 1, **caractérisé en ce que**, pour déterminer la valeur de $d(B_F, ZK)$, on détermine l'espacement individuel d entre le point de référence distant $B_F$, le point de passage d'une droite (direction du regard à 0°) passant par le plan de saisie et s'étendant à travers le point de rotation Z' de l'oeil et horizontalement et une croix de centrage $Z_K$.

4. Procédé selon l'une quelconque des revendications 1 à 3, **caractérisé en ce que**, pour la détermination de la valeur de la longueur de progression individuelle optimale ($L_{opt}$), d'autres valeurs individuelles sont prises en considération.

5. Procédé selon la revendication 4, **caractérisé en ce qu'**une autre valeur individuelle est l'inclinaison préliminaire du plan de saisie.

6. Procédé selon la revendication 4 ou 5, **caractérisé en ce que** d'autres valeurs individuelles sont l'effet sphérique, l'addition, l'effet astigmatique et la position de l'axe ainsi que le prisme et la base du prisme.

7. Procédé selon l'une quelconque des revendications 1 à 6, **caractérisé par** l'association suivante entre l'espacement cornée/sommet HSA et la longueur de progression individuelle $L_{opt}$ :

| HSA | $L_{opt}$ |
|---|---|
| 10 mm | 18,8 mm |
| 15 mm | 22 mm |
| 20 mm | 25,1 mm |

8. Procédé selon l'une quelconque des revendications 1 à 7, **caractérisé en ce que** le calcul du verre de lunettes et en particulier de la surface progressive a lieu en position d'utilisation.